# EUROPÄISCHE PATENTANMELDUNG

(11) **EP 0 831 309 A1**
(43) Veröffentlichungstag der Anmeldung: **25.03.1998**
(21) Anmeldenummer: 97116199.7
(22) Anmeldetag: 18.09.1997
(51) Int. Cl.: G01F 23/56, G01F 23/76, G01N 9/10

(54) **Messeinreichtung zur Bestimmung der Lage einer zwischen zwei übereinandergeschichteten, nicht mischbaren Flüssigkeiten ausgebildeten Grenzschicht**

(30) Priorität: 19.09.1996 DE 29616294 U
(71) Anmelder: Lendle, Markus, 86159 Augsburg (DE); Weishaar, Thomas, 71364 Winnenden (DE)
(72) Erfinder: Weishaar, Thomas, 71364 Winnenden (DE)
(74) Vertreter: Patentanwälte Ruff, Beier, Schöndorf und Mütschele

(57) **Zusammenfassung**

Beschrieben wird eine Meßeinrichtung (1) zur Bestimmung der vertikalen Position einer im wesentlichen horizontalen Grenzschicht (18), die zwischen einer unteren Flüssigkeit (17) mit einer ersten Dichte und einer mit der unteren Flüssigkeit im wesentlichen nicht mischbaren oberen Flüssigkeit (19) mit einer zweiten Dichte, die geringer als die erste Dichte ist, ausgebildet ist. Die Meßeinrichtung hat einen zum Eintauchen in die obere Flüssigkeit (19) und die untere Flüssigkeit (17) ausgebildeten Schwimmkörper (2) mit einer vorgebbaren mittleren Dichte, die kleiner als die erste Dichte und größer als die zweite Dichte ist. Es sind Anzeigemittel (4) zur Bestimmung der vertikalen Position des Schwimmkörpers (2) innerhalb der oberen Flüssigkeit und der unteren Flüssigkeit vorgesehen. Die Meßeinrichtung eignet sich insbesondere zur Bestimmung der Dicke einer im wesentlichen aus Ölen bestehenden Schwimmschicht in einem Leichtstoffabscheider.

## Beschreibung

Die Erfindung betrifft eine Meßeinrichtung zur Bestimmung der vertikalen Position einer im wesentlichen horizontalen Grenzschicht, die zwischen einer unteren Flüssigkeit mit einer ersten Dichte und einer mit der unteren Flüssigkeit im wesentlichen nicht mischbaren oberen Flüssigkeit mit einer zweiten Dichte, die geringer als die erste Dichte ist, ausgebildet ist, insbesondere zur Bestimmung der Dicke einer im wesentlichen aus Ölen bestehenden Schwimmschicht in einem Leichtstoffabscheider.

Mit dem hier verwendeten Begriff Dichte ist die Massedichte bzw. das spezifische Gewicht der Flüssigkeiten gemeint. Die Meßeinrichtung dient somit zur Bestimmung des Niveaus einer Grenzschicht bzw. einer Grenzfläche, die sich ausbildet, wenn sich eine spezifisch leichtere Flüssigkeit beispielsweise als Schicht auf einer spezifisch schwereren Flüssigkeit ablagert oder abscheidet, mit der die spezifisch leichtere Flüssigkeit praktisch nicht mischbar ist. Ein bevorzugtes Einsatzgebiet einer erfindungsgemäßen Meßeinrichtung ist die Messung der Schwimmschichtdicke einer auf einem Wasservolumen schwimmenden benzin- und/oder ölhaltigen Schicht in Leichtstoffabscheidern von Tankstellen, Kfz-Werkstätten, Autowaschanlagen oder dergleichen. Die Bestimmung der Schichtdicke solcher Schichten hat im Rahmen von Wartungstätigkeiten sowie im Rahmen der betrieblichen Eigenkontrolle regelmäßig zu erfolgen. Es wird daher angestrebt, die Schichtdicke der Öl- und /oder Benzinschicht im Abscheidebehälter schnell und einfach und auf wenige Millimeter oder Zentimeter genau bestimmen zu können.

Zu diesem Zwecke gibt es bereits ein Verfahren, wonach ein mit Wassernachweispaste beschichteter Senkstab in die im Abscheider übereinandergeschichteten Flüssigkeiten so weit eingetaucht wird, daß ein unterer Abschnitt des Senkstabes in jedem Fall in das unter der Öl- oder Benzinschicht liegende Wasser eintaucht. In dem Abschnitt, der mit Wasser in Berührung gekommen ist, färbt sich die Wassernachweispaste um, so daß nach Herausziehen des Senkstabes die vertikale Position der Öl/Wasser-Grenzschicht relativ zur Oberfläche der Ölschicht bestimmt werden kann. Da bei diesem Verfahren die auf dem Senkstab aufgestrichene Wassernachweispaste beim Eintauchen in die Schwimmschicht mit Öl benetzt wird, eignet sich das Verfahren nur für dünnflüssige Schwimmschichten, wie beispielsweise leichtes Heizöl. Durch die zumeist wesentlich dickflüssigeren Schwimmschichten von Leichtstoffabscheidern wird die Wassernachweispaste mit einem zähen Ölfilm überzogen, wodurch das umgebende Wasser nicht mehr mit der Paste in Berührung kommt und folglich keine Farbreaktion erfolgt.

Ein weiteres in der Praxis eingesetztes Verfahren ist die Bestimmung der Schichtdicke in einem Leichtstoffabscheider mit Hilfe eines Stechhebers. Bekannt sind Stechheber, die als Plexiglas-Hohlzylinder ausgebildet sind, deren untere Öffnung beispielsweise durch eine von oben betätigbare Kugel verschließbar ist. Bei der Messung wird der zunächst unten offene Plexiglas-Zylinder in die übereinandergeschichteten Flüssigkeiten eingetaucht, bis das untere Ende sich mit Sicherheit im Bereich des Wasser befindet. Das Eintauchen erfolgt derart langsam, daß innerhalb des Hohlzylinders eine zylindrische Säule der übereinandergeschichteten Flüssigkeiten nach dem Prinzip der kommunizierenden Röhren langsam und ohne Verwirbelung in den sich absenkenden Plexiglas-Zylinder eindringen kann. Nach Einstellung des Gleichgewichtes wird die untere Öffnung geschlossen und der Plexiglas-Zylinder aus dem Abscheidebehälter vorsichtig herausgezogen. Wegen der Transparenz des Plexiglas-Zylinders kann nun die Dicke der auf dem Wasser abgeschiedenen Ölschicht beispielsweise anhand einer am Plexiglas-Zylinder angebrachten Skala bestimmt werden. Die Handhabung des Plexiglas-Zylinders bei diesem Verfahren erfordert Zeit und Sorgfalt, die Reinigung eines benutzten Stechhebers zur Vorbereitung für eine nachfolgende Messung ist aufwendig.

Beide genannten Verfahren ermöglichen eine Bestimmung der Schwimmschichtdicke nur zu einem bestimmten Zeitpunkt. Zu einem späteren Zeitpunkt muß eine erneute Messung erfolgen. Eine permanente Überwachung der Schwimmschichtstärke von Öl bzw. Benzin in entsprechenden Abscheidern ist mit diesen Einrichtungen nicht möglich.

Der Erfindung liegt die Aufgabe zugrunde, eine insbesondere bei der Messung der Schwimmschichtdicke von Öl- oder Benzinschichten in Öl- oder Benzinabscheidern verwendbare, einfach zu handhabende Meßeinrichtung zu schaffen, die eine schnelle, genaue Bestimmung des Niveaus einer Grenzschicht zwischen übereinandergeschichteten, nicht mischbaren Flüssigkeiten unterschiedlicher Dichte gestattet. Die Meßeinrichtung soll insbesondere auch zur permaneten Überwachung und Messung der Schwimmschichtdicke geeignet sein.

Diese Aufgabe wird durch eine Meßeinrichtung mit den Merkmalen von Anspruch 1 gelöst.

Der erfindungsgemäße Schwimmkörper der Meßeinrichtung wird bei dem durch die Erfindung geschaffenen Meßverfahren beispielsweise in die obere Flüssigkeit eingetaucht und losgelassen. Dadurch ist er vertikal frei beweglich und sinkt aufgrund seiner vorgegebenen mittleren Dichte, die größer ist als die zweite Dichte der oberen Flüssigkeit, in der Schicht der oberen Flüssigkeit langsam nach unten in Richtung auf die zwischen der oberen und der unteren Flüssigkeit ausgebildete Grenzschicht. Aufgrund seiner im Vergleich zur oberen Flüssigkeit größeren mittleren Dichte ist in der oberen Flüssigkeit der entgegen der Schwerkraft gerichtete hydrostatische Auftrieb geringer als die in Richtung der Schwerkraft gerichtete, durch das Gewicht des Schwimmkörpers bedingte Kraft. Der inkompressible Schwimmkörper taucht nach Durchdringen der Schicht der oberen Flüssigkeit mit seiner Unterseite zuerst in die untere Flüssigkeit ein. Da die mittlere Dichte des Schwimmkörpers kleiner ist als die erste Dichte der unteren Flüssigkeit, erfährt der Schwimmkörper mit zunehmender Eintauchtiefe in die untere Flüssigkeit einen entsprechend dem eingetauchten Volumen zunehmenden Auftrieb, der die Sinkgeschwindigkeit abbremst. Der Schwimmkörper pegelt sich schließlich in einer vertikalen Position ein, bei der die durch die Dichteunterschiede bewirkten Auftriebskräfte und die durch das Gewicht des Schwimmkörpers bedingten Abtriebskräfte miteinander im Gleichgewicht stehen. Da die mittlere Dichte des Schwimmkörpers geringer ist als die erste Dichte der unteren Flüssigkeit, kann der Schwimmkörper nicht innerhalb der unteren Flüssigkeit weiter nach unten sinken, sondern er wird eine vertikale Position einnehmen, bei der zumindest ein kleiner Volumenbereich des Schwimmkörpers oberhalb der Oberfläche der unteren Flüssigkeit verbleibt. Der Schwimmkörper pegelt sich in einer vertikalen Position ein, die in einem durch die Dichten der beteiligten Flüssigkeiten, die mittlere Dichte des Schwimmkörpers und dessen äußere Form vorgegebenen Verhältnis zur vertikalen Position der Grenzschicht steht. Der Schwimmkörper stellt eine in ihrer vertikalen Position eindeutig identifizierbare Markierung für die Lage der Grenzschicht dar. Mit Hilfe von Anzeigemitteln kann diese vertikale Gleichgewichtsposition des Schwimmkörpers innerhalb der oberen und der unteren Flüssigkeit bestimmt werden. Bei bekannter vertikaler Position der Oberfläche der oberen Flüssigkeit oder eines anderen Bezugspunktes ist somit auch die Schichtdicke der oberen Flüssigkeit zwischen Oberfläche und Grenzschicht eindeutig bestimmbar. Bei bekannter Querschnittsfläche und Füllhöhe des die Flüssigkeiten aufnehmenden Behältnisses sind damit auch Volumenmessungen der oberen und unteren Flüssigkeiten möglich.

Die Anzeigemittel können der zu lösenden Aufgabe entsprechend ausgewählt werden. Die Positionsbestimmung kann beispielsweise mit Hilfe elektromagnetischer Strahlung nach dem Reflexionsprinzip erfolgen. Wenn mindestens eine der beteiligten Flüssigkeiten für sichtbares Licht transparent ist, kann es ausreichen, wenn der Schwimmkörper von den Flüssigkeiten optisch unterscheidbar ist. Seine vertikale Position zwischen den Flüssigkeiten kann dann mit üblichen optischen Vermessungsmethoden oder durch einfaches Hinsehen bestimmt werden. Als Anzeigemittel könnte in diesem Fall eine von der Farbe der Flüssigkeiten abweichende Farbe vorgesehen sein.

Die Anzeigemittel sind vorzugsweise als Positionsbestimmungsmittel ausgebildet. Die Positionsbestimmungsmittel können beispielsweise Sender und Empfänger für akustische Wellen umfassen. Zur Tiefenbestimmung des Schwimmkörpers kann beispielsweise ein Echolot eingesetzt werden. Bei Einsatz elektromagnetischer oder akustischer Positionsbestimmungsmittel kann die Reflexionsfähigkeit des Schwimmkörpers durch geeignete Oberflächenbehandlung, beispielsweise durch eine Beschichtung, erhöht werden. Die Positionsbestimmungsmittel können auch an den Schwimmkörper angebrachte, vorzugsweise langgestreckte biegsame oder starre Elemente wie Fäden, Kabel, Stäbe oder dergleichen sein, die über die Oberfläche der oberen Flüssigkeit hinausragen und somit eine Tiefenbestimmung des Schwimmkörpers relativ zur Oberfläche der oberen Flüssigkeit oder zu einer anderen geeigneten vertikalen Bezugsposition ermöglichen.

Mögliche Ausführungsformen zeichnen sich dadurch aus, daß der beispielsweise als Kugel ausgebildete Schwimmkörper eine mittlere Dichte aufweist, die nahe dem arithmetischen Mittel der ersten Dichte und der zweiten Dichte liegt. Bei großen Dichtenunterschieden zwischen oberer und unterer Flüssigkeit kann es vorteilhaft sein, wenn der Schwimmkörper eine mittlere Dichte aufweist, die weniger als 10%, vorzugsweise weniger als 5% kleiner ist als die erste Dichte der unteren Flüssigkeit. In diesem Fall ist der Schwimmkörper im Gleichgewicht im wesentlichen vollständig in die untere Flüssigkeit eingetaucht, so daß die Oberseite des Schwimmkörpers annähernd niveaugleich mit der Grenzschicht ist. Bei Meßeinrichtungen, die zur Bestimmung der Dicke einer auf einem Wasservolumen abgeschiedenen Ölschicht in Ölabscheidern verwendet werden, ist es von Vorteil, wenn der Schwimmkörper eine mittlere Dichte zwischen 0,95 und 0,99 g/cm³ aufweist, vorzugsweise zwischen 0,97 und 0,98 g/cm³.

Die vorgebbare mittlere Dichte des Schwimmkörpers kann dadurch eingestellt werden, daß der Schwimmkörper aus Vollmaterial gefertigt ist, das die gewünschte mittlere Dichte aufweist. Die Einstellung der vorgebbaren mittleren Dichte auf eine bestimmte Kombination zweier Flüssigkeiten wird insbesondere dann erleichtert, wenn der Schwimmkörper einen geschlossenen im wesentlichen starren Mantelkörper mit einem innerhalb des Mantelkörpers ausgebildeten Hohlraum aufweist. Je nach Dichte des gewünschten Materials des Mantelkörpers können dessen Volumen, das Volumen des Hohlraums und das durch die Außenfläche des Mantelkörpers umschlossene Volumen so aufeinander abgestimmt werden, daß der Schwimmkörper insgesamt die gewünschte mittlere Dichte aufweist. Eine größere Flexibilität bei der Einstellung der gewünschten mittleren Dichte ergibt sich dann, wenn der Schwimmkörper aus zwei oder mehreren miteinander verbundenen Festkörpern aus Materialien unterschiedlicher Dichte aufgebaut ist. Über das Dichte- und Volumenverhältnis der verbundenen Festkörper ist die gewünschte mittlere Dichte leicht einstellbar.

Vorzugsweise ist der Schwimmkörper so ausgebildet, daß sein geometrischer bzw. durch die äußere Form bedingter Auftriebsschwerpunkt und sein Gewichts- bzw. Masseschwerpunkt nicht zusammenfallen. Der Begriff Auftriebsschwerpunkt bezeichnet in Analogie zum Masseschwerpunkt den Punkt, an dem ein Körper bezüglich der an ihm angreifenden Auftriebskräfte konzentriert gedacht werden kann. Durch diese Ausbildung wird erreicht, daß sich der Schwimmkörper, der innerhalb der Flüssigkeiten frei beweglich ist, sich im Schwerefeld derart ausrichtet, daß die beiden Schwerpunkte des Schwimmkörpers derart vertikal übereinanderliegen, daß der Auftriebsschwerpunkt oberhalb des Masseschwerpunktes liegt. Ist die Positionsbestimmungseinrichtung beispielsweise ein Meßstab, dann ist dieser vorzugsweise in der Verlängerung des Verbindungsstrahls von Masseschwerpunkt zu Auftriebsschwerpunkt ausgerichtet und weist dann stets nach oben. Bei einem Schwimmkörper mit Mantelkörper und Hohlraum kann dieser "Stehaufmännchen-Effekt" dadurch erreicht werden, daß in dem Hohlraum ein Massekörper befestigt ist, dessen Material vorzugsweise eine Dichte aufweist, die deutlich größer ist als die mittlere Dichte des Schwimmkörpers und daß der Schwerpunkt des Mantelkörpers und der Schwerpunkt des Massekörpers nicht zusammenfallen. Der Massekörper kann den Hohlraum vollständig ausfüllen, z.B. wenn es auf eine bestimmte Ausrichtung nicht ankommt, vorzugsweise füllt er ihn nur teilweise aus. Der Massekörper kann beispielsweise als ein in dem Hohlraum eingegossener Zementblock ausgebildet sein.

Es ist wünschenswert, daß der Schwimmkörper so wenig wie möglich mit den beteiligten Flüssigkeiten insbesondere mit der oberen Flüssigkeit, in chemische oder pysikalische Wechselwirkung tritt. Damit kann erreicht werden, daß sich seine vertikale Position im wesentlichen aus der mittleren Dichte und dem Volumen des Schwimmkörpers und den Dichten der beteiligten Flüssigkeiten ergibt. Mit Vorteil weist der Schwimmkörper eine glatte Oberfläche geringer Rauhigkeit auf, die vorzugsweise aus einem durch die obere Flüssigkeit schlecht benetzbaren und vorzugsweise gegenüber beiden Flüssigkeiten resistentem Material besteht. Die schlechte Benetzbarkeit erleichtert beim Eintauchen des Schwimmkörpers das Durchdringen der oberen Flüssigkeit in Richtung auf die untere Flüssigkeit, da annähernd keine obere Flüssigkeit an dem Schwimmkörper aufgrund von Adhäsion z.B. in Form von Tröpfchen hängenbleibt. Insbesondere bei Meßeinrichtungen, die zur Schichtdickenbestimmung von Ölschichten in Ölabscheidern verwendet werden, ist es vorteilhaft, wenn eine äußere, die Oberfläche des Schwimmkörpers bildende Schicht aus einem durch das Öl nur schlecht benetzbaren Material besteht, vorzugsweise aus Polyvinylchlorid (PVC). Dieses Material ist sowohl gegen Öl als auch gegen Wasser resistent und zeigt ihnen gegenüber eine sehr geringe Affinität. Es ist auch gegen eventuelle korrosive Beimischungen in dem Öl im wesentlichen unempfindlich. Bei einem Schwimmkörper mit Mantelkörper und schwerem Massekörper kann der Mantelkörper vorzugsweise vollständig aus Polyvinylchlorid bestehen.

Zur Vermeidung des unerwünschten Hängenbleibens von Tropfen der oberen Flüssigkeit an dem Schwimmkörper beim Eintauchen in die untere Flüssigkeit kann es weiter von Vorteil sein, wenn der Schwimmkörper eine im wesentlichen vollständig nach außen abgerundete Form aufweist. Diese Form erleichtert auch die Reinigung des Schwimmkörpers nach Beendigung eines Meßvorganges. Eine nach außen abgerundete, glatte Form bietet wenig Haftstellen für Flüssigkeitströpfchen. Die abgerundete Form kann eine rotationssymetrische Form, beispielsweise die Form einer Kugel oder eines Eies sein. Rundzylinder mit abgerundeten Stirnflächen sind bevorzugt. Auftriebsschwerpunkt und Gewichtsschwerpunkt liegen vorzugsweise auf der Rotationsachse.

Wenn der Schwimmkörper eine nach unten abgerundete Unterseite aufweist, die beispielsweise die Form einer Kalotte haben kann, so ist gewährleistet, daß beim Eintauchen des Schwimmkörpers in die untere Flüssigkeit Flüssigkeitströpfchen der oberen Flüssigkeit seitlich nach oben abströmen können. Die Oberseite kann ebenfalls abgerundet sein. Sie weist vorzugsweise die Form einer flachen Kalotte auf. Wenn die Oberseite relativ flach ausgebildet ist, d.h. wenn die Oberflächennormale im Bereich der Oberseite nur geringfügig von der Normalen der Grenzfläche abweicht, dann bedeutet eine geringfügige vertikale Verschiebung des Schwimmkörpers nach oben, daß vergleichsweise viel Volumen über die Grenzschicht hinaus nach oben in den Bereich der leichteren Flüssigkeit gehoben wird. Dies bewirkt einen relativ starken Anstieg der resultierenden nach unten gerichteten Kraft bei nur geringer Anhebung des Schwimmkörpers nach oben, so daß Abweichungen nach oben aus der stabilen Gleichgewichts-Schwimmlage erschwert werden. Abweichungen nach unten sind dadurch erschwert, daß durch die im Vergleich zur unteren Flüssigkeit größere mittlere Dichte des Schwimmkörpers dieser in der unteren Flüssigkeit einen Auftrieb erfährt. Eine bevorzugte Ausführungsform der Meßeinrichtung stellt sich somit relativ sicher auf eine vertikale Position ein, bei der die Oberseite des Schwimmkörpers im wesentlichen niveaugleich mit der Grenzschicht ist.

Bei einer bevorzugten Ausführungsform ist der Mantelkörper des Schwimmkörpers aus einer nach unten geöffneten oberen Schale und einer nach oben geöffneten, vorzugsweise mit der oberen Schale identisch ausgebildeten unteren Schale zusammengesetzt. Die Zusammensetzung aus identischen Schalen ist fertigungstechnisch besonders vorteilhaft. Die obere Schale und die untere Schale sind entlang ihrer aneinanderstoßenden Ränder unter Bildung des Hohlraumes miteinander verbunden. Sie können miteinander verschraubt sein, sind jedoch vorzugsweise stoffschlüssig miteinander verbunden. Die Schalen können beispielsweise miteinander verschweißt sein, vorzugsweise sind sie miteinander verklebt. Diese Verbindung schafft einen flüssigkeitsdichten Mantelkörper, der den Hohlraum umschließt. Die Schalen, bzw. der Mantelkörper können vorzugsweise aus Polyvinylchlorid bestehen. Der Massekörper kann in den Hohlraum eingeschraubt, eingeklebt, eingeklemmt, eingegossen oder auf andere Weise befestigt sein. Bei der bevorzugten Ausführungsform ist er als in den Hohlraum, insbesondere in die untere Schale eingegossener Zementblock ausgebildet. Das Eingießen zur Bildung des Massekörpers kann vor oder nach dem Zusammenfügen der Schalen erfolgen. Durch das eingefüllte Füllvolumen läßt sich das Volumen des Massekörpers und damit die mittlere Dichte des Schwimmkörpers einfach und exakt einstellen und auf beliebige Flüssigkeitskombinationen abstimmen. Zement ist im Hinblick auf die Entsorgung unkritisch.

Die Positionsbestimmungsmittel können, wie ausgeführt, Mittel zur akustischen oder elektromagnetischen, insbesondere optischen Lagebestimmung des Schwimmkörpers umfassen. Besonders preisgünstig, leicht herstellbar und in den weitaus meisten Fällen leicht handhabbar und hinreichend genau sind Ausführungsformen, bei denen die Positionsbestimmungsmittel mindestens ein an dem Schwimmkörper befestigtes, vorzugsweise langgestrecktes Meßelement, insbesondere einen Meßstab umfassen. Das Meßelement kann auch ein biegsames, aber in seiner Länge im wesentlichen nicht dehnbares Meßelement, etwa ein Seil, eine Kette oder ein Faden sein, an dem der Schwimmkörper bis in seine Gleichgewichtslage hinabgesenkt wird. Das Erreichen der Gleichgewichtslage macht sich im Fall eines Fadens am Verlust der Fadenspannung bemerkbar. Nach Herausziehen des Schwimmkörpers kann anhand der von der oberen Flüssigkeit benetzten Fadenlänge die Schichtdicke der oberen Flüssigkeit bestimmt werden. Dieses Verfahren mit Hinabsenken des Schwimmkörpers bis in seine Gleichgewichtslage, anschließendem Herausziehen des Schwimmkörpers und Bestimmung der Schichtdicke der oberen Flüssigkeit anhand der benetzten Länge des langgestreckten Meßelementes ist gleichermaßen mit einem als Meßstab ausgebildeten Meßelement möglich.

Besitzt das Meßelement Markierungen, dann kann die Messung auch vorgenommen werden, solange sich die Meßeinrichtung im Grenzflächenbereich befindet. Da die vertikale Lage des Schwimmkörpers durch die vertikale Lage der Grenzschicht bestimmt wird, ist die Messung unabhängig von der die Eintauchtiefe überschreitenden Tiefe der unteren Flüssigkeit. Der Verfahrensschritt des Herausziehens kann entfallen, wenn das vorzugsweise starre Meßelement, insbesondere der Meßstab entlang seiner Längsachse, mindestens eine Markierung aufweist, vorzugsweise mehrere Markierungen in Form einer vertikalen Skala. Diese Meßeinrichtung kann permanent in ihrer Gleichgewichtslage verbleiben. Die Schichtdicke der oberen Flüssigkeit kann anhand des Abstandes zwischen der Oberfläche der oberen Flüssigkeit und der Markierung bzw. anhand der Skala kontinuierlich festgestellt werden. Die Markierung kann im übrigen auch einfach durch das obere Ende des Meßstabes gebildet sein.

Zur Gewährleistung einer senkrechten Ausrichtung des Meßstabes ist es von Vorteil, wenn dieser mit seiner Längsachse parallel zu einer den Auftriebsschwerpunkt und den Masseschwerpunkt verbindenden Geraden ausgerichtet ist. Die Ausrichtung des Schwimmkörpers im Schwerefeld sorgt dann zwangsläufig für eine vertikale Ausrichtung des Meßstabes. Bei einem Schwimmkörper mit zwei Festkörpern verschiedener Dichten kann der Meßstab mit seiner Längsachse parallel zu einer die Schwerpunkte der zwei Festkörper verbindenden Geraden ausgerichtet sein.

Bei einer Meßeinrichtung mit Schwimmkörper und Meßelement kann deren gesamte mittlere Dichte so eingestellt sein, daß sie der vorgebbaren mittleren Dichte entspricht. Die mittlere Dichte des Meßelements kann beispielsweise gleich der mittleren Dichte des Schwimmkörpers sein.

Das Meßelement kann zweckmäßigerweise so beschaffen sein, daß sein Volumen weniger als 3%, vorzugsweise weniger als 1,5% des Volumens des Schwimmkörpers beträgt. Dadurch erfährt der jeweils von der oberen Flüssigkeit umgebene Abschnitt des Meßelements nur einen geringen Auftrieb durch die obere Flüssigkeit, wodurch der Einfluß auf die vertikale Position der Meßeinrichtung vernachläßigbar gering gehalten wird. Vorzugsweise ist das Meßelement ein dünner Meßstab aus Polyvinylchlorid.

Beim Verfahren zur Bestimmung der vertikalen Position der beschriebenen, im wesentlichen horizontalen Grenzschicht wird ein zum Eintauchen in die obere Flüssigkeit und die untere Flüssigkeit ausgebildeter Schwimmkörper mit einer vorgebbaren mittleren Dichte, die kleiner als die erste Dichte der unteren Flüssigkeit und größer als die zweite Dichte der oberen Flüssigkeit ist, in die obere Flüssigkeit und die untere Flüssigkeit eingetaucht bzw. abgesenkt. Ist beispielsweise bei einem Ölabscheider noch keine obere Schicht vorhanden, kann der Schwimmkörper auch lediglich in die vorhandene untere Schicht eingetaucht werden. Die obere Schicht baut sich dann allmählich auf. Nach Einstellen einer vertikalen Gleichgewichtsposition des Schwimmkörpers wird mit Hilfe von Positionsbestimmungsmitteln die vertikale Position des Schwimmkörpers innerhalb der oberen Flüssigkeit und der unteren Flüssigkeit bestimmt. Diese Bestimmung kann zum einen erfolgen, während der Schwimmkörper sich in seiner Gleichgewichtsposition befindet. Zur Positionsbestimmung können beispielsweise auf dem Reflexionsprinzip beruhende elektromagnetische oder akustische Einrichtungen verwendet werden. Es ist auch möglich, den Schwimmkörper mittels eines an ihm befestigten, vorzugsweise langgestreckten Meßelementes, beispielsweise einer Schnur oder einem Maßband, in die Flüssigkeiten abzulassen und die Messung der vertikalen Position anhand des mittels des Meßelementes feststellbaren Abstandes des Schwimmkörpers zur Oberfläche der oberen Flüssigkeit oder zu einer anderen Vergleichsebene durchzuführen.

Eine oder mehrere Meßeinrichtungen der beschriebenen Art können mit Vorteil zur Überwachung chemischer Reaktionen und Stoffsynthesen verwendet werden, bei denen Flüssigkeiten beteiligt sind oder entstehen, welche nicht miteinander mischbar sind und Dichteunterschiede aufweisen. Anhand der vertikalen Ausrichtung und der räumlichen Verteilung von Meßeinrichtungen der beschriebenen Art, welche je nach den Dichten der Reaktionspartner und -produkte unterschiedlich eingestellte mittlere Dichten aufweisen, können Reaktionsabläufe und Stoffsynthesen vergleichend überwacht und beurteilt werden. Es wird außerdem die Verwendung einer erfindungsgemäß ausgebildeten Meßeinrichtung zur Bestimmung der vertikalen Position einer Flüssigkeitsgrenzschicht gelehrt. Eine bevorzugte Verwendung ist die Schichtdickenbestimmung von Öl- oder Benzinschichten in Öl- bzw. Benzinabscheidern.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung oder auf anderen Gebieten verwirklicht sein oder vorteilhafte Ausführungen darstellen können. Ausführungsbeispiele der Erfindung sind in den Zeichnungen dargestellt. Es zeigen:
- Fig. 1: einen Querschnitt durch eine Ausführungsform einer erfindungsgemäßen Meßeinrichtung und
- Fig. 2: eine Seitenansicht der in Fig. 1 gezeigten Meßeinrichtung, die sich auf eine Gleichgewichtsposition innerhalb einer spezifisch schwereren unteren Flüssigkeit und einer spezifisch leichteren oberen Flüssigkeit eingepegelt hat.

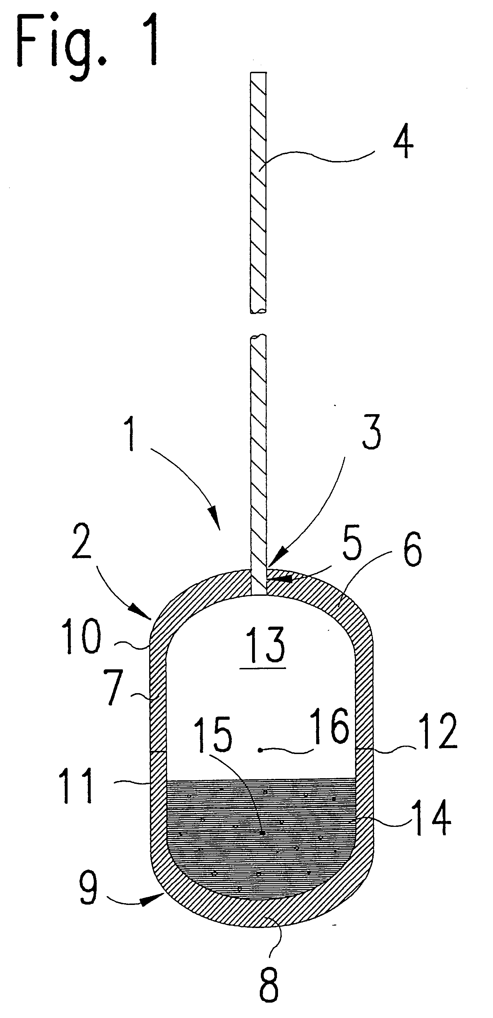

Fig. 1 zeigt eine Seitenansicht einer Ausführungsform der Meßeinrichtung 1 im Querschnitt. Die Meßeinrichtung 1 umfaßt einen Schwimmkörper 2 und ein an dem Schwimmkörper im Bereich von dessen Oberseite 3 befestigtes Positionsbestimmungsmittel 4, das als gerader Rundstab aus Polyvinylchlorid ausgebildet ist, im Beispiel einen Durchmesser von 4 mm und gemessen von der Oberseite des Schwimmkörpers 2 eine Länge von ca. 210 mm aufweist und in eine vertikale Bohrung 5 in der oberen Wandung 6 des Schwimmkörpers 2 eingeklebt ist. Die nach oben in Form einer flachen Kalotte abgerundete obere Wandung 6 bildet mit der nach unten daran anschließenden, zylindrischen Seitenwandung 7 und der darunter anschließenden, gegengleich zur oberen Wandung 6 ausgebildeten unteren Wandung 8 einen Mantelkörper 9 des Schwimmkörpers 2. Der Mantelkörper ist geschlossen, weist im Bereich der Seitenwandung eine Wandstärke von ca. 4 mm und im Bereich der oberen bzw. unteren Wandung eine geringfügig stärkere Wandstärke auf und besteht aus Hart-Polyvinylchlorid. Es ist entlang der zentralen Längsachse gemessen ca. 90 mm hoch und hat einen Außendurchmesser von ca. 57 mm. Er ist aus einer nach unten geöffneten oberen Schale 10 und einer nach oben geöffneten, mit der oberen Schale identisch ausgebildeten unteren Schale 11 zusammengesetzt. Die beiden Schalen 10, 11 sind entlang ihrer aneinanderstoßenden ebenen Ränder durch eine Verklebung 12 in der Art miteinander verbunden, daß der in dem Mantelkörper 9 ausgebildete Hohlraum 13 flüssigkeitsdicht von der Außenseite des Mantelkörpers abgeschlossen ist. Auch die Verklebung im Bereich der den Meßstab 4 aufnehmenden Bohrung 5 ist flüssigkeitsdicht. Der Mantelkörper 9 ist insbesondere wegen des gewählten Materials, der ausreichenden Wandstärken und der vollständig nach außen abgerundeten Form im wesentlichen inkompressibel, so daß sich sein durch seine äußere Oberfläche eingeschlossenes Volumen auch unter Einwirkung hydrostatischen Druckes praktisch nicht ändert. Die äußere Oberfläche des Mantelkörpers 9 ist im wesentlichen glatt und kantenfrei, Öl und Wasser perlen aufgrund der geringen Benetzbarkeit der PVC-Oberfläche durch Öl und Wasser von dieser ab.

In dem Hohlraum 13 des Mantelkörpers 9 ist in der unteren Schale 11 ein Zementblock 14 aus schnellbindendem Zement eingegossen. Der Zementblock 14 ist, wie die untere Schale 11, die obere Schale 10 und der Meßstab 4 rotationssymmetrisch zur Längsachse des Meßstabes 4. Dadurch fällt sein Masseschwerpunkt 15 auf diese Symmetrieachse. Der Masseschwerpunkt 16 des Mantelkörpers liegt aufgrund der Symmetrie der beiden Schalen 10, 11 auf vertikaler Höhe der Verklebung 12 auf der Symetrieachse. Der Masseschwerpunkt 16 des Mantelkörpers fällt mit dem Auftriebsschwerpunkt des Schwimmkörpers zusammen. Der Masseschwerpunkt der den Schwimmkörper 2 und den Meßstab 4 umfassenden Meßeinrichtung 1 liegt geringfügig oberhalb des Masseschwerpunktes des Schwimmkörpers, der zwischen den Schwerpunkten 15 und 16 liegt. Eine derart ausgebildete Meßeinrichtung richtet sich, sofern sie frei beweglich auf einer Flüssigkeit oder in einer oder mehrere Flüssigkeiten schwimmt, im Schwerefeld der Erde so ein, daß der Schwerpunkt 16 des Mantelkörpers senkrecht oberhalb des Schwerpunktes 15 des als Zementblock ausgebildeten Massekörpers 14 liegt. Dann ist der Meßstab 4 mit seiner Längsachse ebenfalls vertikal ausgerichtet, denn diese fluchtet mit der Verbindungsgeraden zwischen den Schwerpunkten.

Die Herstellung der beschriebenen Meßeinrichtung erfolgt, indem die obere Schale 10 mit der Bohrung 5 versehen wird und die obere Schale 10 und die untere Schale 11 miteinander entlang ihrer Ränder verklebt werden. Nach Abbinden des Klebers wird durch die Bohrung 5 ein gewünschtes Volumen der Zementmasse bei senkrechtgestelltem Mantelkörper in den Hohlraum 13 eingefüllt und härtet dort zu einem in der unteren Schale 11 eingelagertem Zementblock 14 aus. Das restliche Volumen des Hohlraumes bleibt mit Luft gefüllt. Anschließend wird der Meßstab 4 in die Bohrung 5 eingeführt und dort mit der oberen Wandung 6 verklebt.

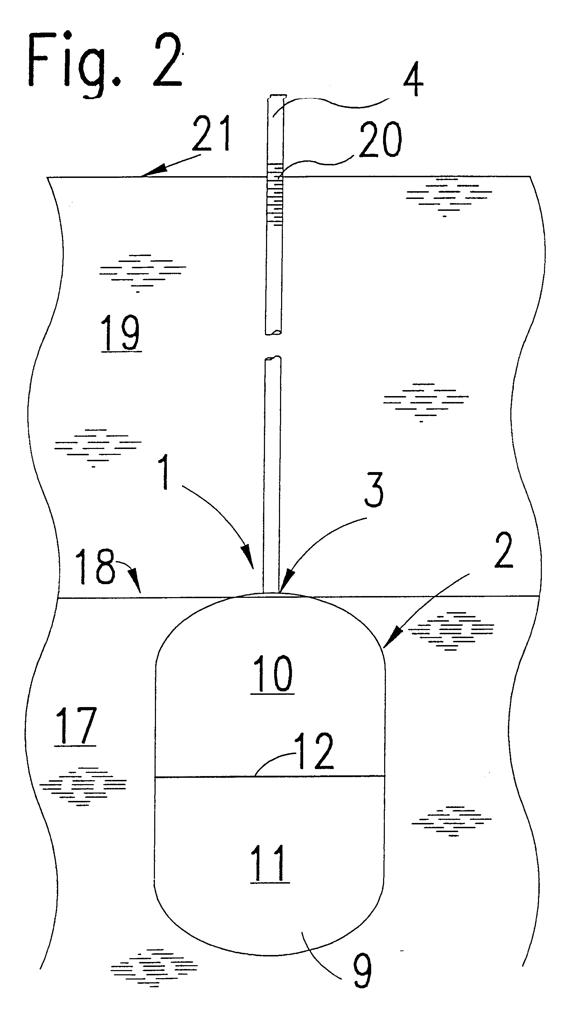

Fig. 2 zeigt die in Zusammenhang mit Fig. 1 beschriebene Meßeinrichtung 1 nach Einstellung eines Schwebegleichgewichtes innerhalb einer unteren Flüssigkeit 17, auf der unter Bildung einer horizontalen Grenzschicht 18 eine mit der unteren Flüssigkeit 17 nicht mischbare obere Flüssigkeit 19 abgeschieden ist. Die Dichte bzw. das spezifisches Gewicht der oberen Flüssigkeit 19 ist geringer als die Dichte bzw. das spezifische Gewicht der unteren Flüssigkeit 17. Im gezeigten Beispiel besteht die obere Schicht 19 aus Altöl mit einer Dichte von ca. 0,85 g/cm³. Das Öl ist lichtundurchlässig, so daß eine optische Lagebestimmung des Schwimmkörpers mittels sichtbaren Licht von oben nicht möglich ist. Die untere Flüssigkeit ist Wasser mit einer Dichte von ca. 1 g/cm³. Die obere und die untere Flüssigkeit sind nicht miteinander mischbar. Dadurch bildet sich zwischen ihnen die Grenzschicht 18, die im Idealfall völlig unmischbarer Flüssigkeiten im Gleichgewicht horizontal und eben ist und eine praktisch verschwindende Schichtdicke hat. In der Praxis kann der Übergang zwischen den beiden Flüssigkeiten diffus sein, so daß eine Grenzschicht endlicher Dicke entsteht, die im Fall einer Öl/Wasser-Grenzschicht eine Emulsion von Öltröpfchen im Wasser bilden kann.

Der Schwimmkörper 2 hat bei einer vorgegebenen Dichte von Polyvinylchlorid und einer Dichte des den Zementblock 14 (Fig. 1) bildenden Zements bei einem gewählten Verhältnis zur Menge des Zementes zu Volumen des Luftraumes eine mittlere Dichte von ca. 0,975 g/cm³. Diese ist somit nur ca. 2,5% kleiner als die Dichte des Wassers 17. Die Dichte des PVC-Meßstabes 4 ist geringfügig größer, so daß die mittlere Dichte der gesamten Meßeinrichtung 1 etwas größer als 0.975 g/cm³, jedoch geringer als die des Wassers 17 ist. Aufgrund dieser Dichteverhältnisse taucht der Schwimmkörper 2 praktisch vollständig in das Wasser 17 ein, ohne jedoch in dem Wasser abzusinken. Im Gleichgewicht nach Einpegeln des Schwimmkörpers ist die Oberseite 3 des Schwimmkörpers 2 annähernd niveaugleich mit der Grenzschicht 18. Die Oberseite 3 des Schwimmkörpers 2 markiert somit die vertikale Position der Grenzschicht 18 auf wenige Millimeter genau. Diese Abweichung wird bei der Skalierung 20 berücksichtigt.

Die vertikale Position der horizontalen Grenzschicht 18 kann nun dadurch bestimmt werden, daß an dem über die Oberfläche 21 der oberen Flüssigkeit 19 hinausragenden Meßstab 4 eine Skala 20 angebracht ist, deren Nullpunkt wenige Millimeter unterhalb der Oberfläche 3 des Schwimmkörpers 2 im Bereich der Bohrung 5 liegt. Eine derartige Meßeinrichtung ist für die kontinuierliche Überwachung der Schichtdicke beispielsweise einer Ölschicht in einem Ölabscheider geeignet, denn der Vertikalabstand zwischen dem Nullpunkt und der an der Skala 20 ablesbaren vertikalen Position der Oberfläche 21 der oberen Flüssigkeit 19 gibt direkt die Ölschichtdicke an. Es ist auch möglich, eine Meßeinrichtung ohne Skala am Meßstab zu verwenden. Die Meßeinrichtung kann nach Einstellung des Schwebegleichgewichtes aus dem Ölabscheider herausgezogen werden. Die Ölschichtdicke kann anhand des Abstandes zwischen der Lage der Grenze zwischen dem ölbenetzten Abschnitt des Meßstabes und dem ölfreien, im Gleichgewicht oberhalb der Oberfläche 21 gelegenen Abschnitt und einem festgesetzten Nullpunkt, bestimmt werden. Als Bezugshöhen sind auch andere vorgegebene Höhen als die Oberfläche 21 der oberen Flüssigkeit 19 möglich.

Eine andere nicht gezeigte Ausführungsform der Meßeinrichtung ist durch die Kombination bestimmter Sicherheitseinrichtungen von Leichtstoffabscheidern mit einem Positionsbestimmungsmittel gegeben. In vielen Fällen sind zur Verhinderung eines Ölabflusses bei Überschreiten der Ölspeicherkapazität des Ölabscheiders bestimmte Sicherheitseinrichtungen als selbsttätige Abschlüsse ausgebildet. Diese bestehen aus einem Schwimmkörper, der über eine Stange mit einer Abschlußplatte fest verbunden ist, welche aufgrund ihrer Dichte den Massenschwerpunkt der Sicherheitseinrichtung unterhalb des Auftriebsschwerpunkts verlagert und zu einer vertikalen Ausrichtung der in einer am Ölabscheider fest angebrachten Führung vertikal frei beweglichen Sicherheitseinrichtung führt. Da Ölabscheider nach dem Prinzip eines Syphons aufgebaut sind, verdrängt das einfließende Öl eine entsprechende Masse an Wasser wodurch die Grenzschicht zwischen Wasser und Öl relativ zur Öloberfläche nach unten verlagert, der Abstand der Öloberfläche gegenüber einem festen Bezugspunkt beispielsweise am Ölabscheider jedoch nur geringfügig nach oben verändert wird. Da die Sicherheitseinrichtung eine mittlere Dichte aufweist, welche kleiner als Wasser und größer als Öl ist, wird sie bei Ansteigen der Ölschicht relativ zur Öloberfläche und auch zu einem Bezugspunkt am Ölabscheider nach unten verlagert, wobei die Abschlußplatte der Sicherheitseinrichtung die am unteren Ende der Führung angebrachte Öffnung des Abflußrohres verschließt und einen Abfluß von Öl verhindert. Durch das Anbringen beispielsweise eines vertikal ausgerichteten Meßstabes an der Oberseite des Schwimmkörpers kann über die Eintauchtiefe des nicht mehr sichtbaren Schwimmkörpers die Grenzschicht zwischen Wasser und Öl und damit die Ölschichtdicke ermittelt werden.

Die Erfindung ermöglicht somit die Schaffung einer Schichtdickenmeßeinrichtung zur Bestimmung der Dicke einer Schicht einer eine zweite Dichte aufweisenden oberen Flüssigkeit, die insbesondere öl- und/oder benzinhaltig ist und die auf einer unteren, mit der oberen Flüssigkeit im wesentlichen nicht mischbaren Flüssigkeit aufschwimmt, die eine erste Dichte aufweist, die größer ist als die zweite Dichte. Diese ist gekennzeichnet durch einen zum Eintauchen in die obere Flüssigkeit und die untere Flüssigkeit ausgebildeten Schwimmkörper mit einer vorgebbaren mittleren Dichte, die kleiner als die erste Dichte und größer als die zweite Dichte ist und durch Anzeigemittel zur Bestimmung der vertikalen Position des Schwimmkörpers innerhalb der oberen Flüssigkeit und der unteren Flüssigkeit. Dabei ist es bevorzugt, wenn die Anzeigemittel als mindestens ein an dem Schwimmkörper befestigtes, vorzugsweise langgestrecktes Meßelement, insbesondere als Meßstab ausgebildet sind, wobei das Meßelement zum Herausragen über die Oberfläche der Schicht der oberen Flüssigkeit ausgebildet ist.

Die beschriebenen Einrichtungen und andere, für den Fachmann nach der Lehre der Erfindung herstellbare Meßeinrichtungen stellen zuverlässig arbeitende Hilfsmittel dar, die beispielsweise im Rahmen von Wartungstätigkeiten sowie der betrieblichen Eigenkontrolle von Öl- und Benzinabscheidern mit Vorteil einsetzbar sind.

## Patentansprüche

1. Meßeinrichtung (1) zur Bestimmung der vertikalen Position einer im wesentlichen horizontalen Grenzschicht (18), die zwischen einer unteren Flüssigkeit (17) mit einer ersten Dichte und einer mit der unteren Flüssigkeit im wesentlichen nicht mischbaren oberen Flüssigkeit (19) mit einer zweiten Dichte, die geringer als die erste Dichte ist, ausgebildet ist, insbesondere zur Bestimmung der Dicke einer im wesentlichen aus Ölen bestehenden Schwimmschicht in einem Leichtstoffabscheider, gekennzeichnet durch einen zum Eintauchen in die obere Flüssigkeit (19) und die untere Flüssigkeit (17) ausgebildeten Schwimmkörper (2) mit einer vorgebbaren mittleren Dichte, die kleiner als die erste Dichte und größer als die zweite Dichte ist und durch Anzeigemittel (4) zur Bestimmung der vertikalen Position des Schwimmkörpers (2) innerhalb der oberen Flüssigkeit und der unteren Flüssigkeit.

2. Meßeinrichtung nach Anspruch 1, dadurch gekennzeichnet, daß die Anzeigemittel als Positionsbestimmungsmittel (4) ausgebildet sind.

3. Meßeinrichtung nach Anspruch 1 oder 2, dadurch gekennzeichnet, daß der Schwimmkörper (2) eine mittlere Dichte aufweist, die von der ersten Dichte und/oder der zweiten Dichte um weniger als 10%, vorzugsweise um weniger als 5 % abweicht, wobei die mittlere Dichte insbesondere um weniger als 10%, vorzugsweise um weniger als 5% geringer ist als die erste Dichte der unteren Flüssigkeit (17).

4. Meßeinrichtung nach einem der vorhergehenden Ansprüche, dadurch gekennzeichnet, daß der Schwimmkörper (2) eine mittlere Dichte zwischen 0,95 und 0,99 g/cm³ aufweist, vorzugsweise zwischen 0,97 und 0,98 g/cm³.

5. Meßeinrichtung nach einem der vorhergehenden Ansprüche, dadurch gekennzeichnet, daß der Schwimmkörper (2) einen geschlossenen Körper, insbesondere einen Mantelkörper (9) mit einem innerhalb des Mantelkörpers ausgebildeten Hohlraum (13) aufweist.

6. Meßeinrichtung nach einem der vorhergehenden Ansprüche, dadurch gekennzeichnet, daß der Schwimmkörper (2) einen Auftriebsschwerpunkt und einen Masseschwerpunkt aufweist und daß der Auftriebsschwerpunkt und der Masseschwerpunkt nicht zusammenfallen, wobei vorzugsweise der Schwimmkörper (2) aus zwei miteinander verbundenen Festkörpern (9, 14) aus Materialien unterschiedlicher Dichte aufgebaut ist und vorzugsweise die Schwerpunkte (15, 16) der zwei Festkörper (9, 14) nicht zusammenfallen.

7. Meßeinrichtung nach einem der Ansprüche 5 oder 6, dadurch gekennzeichnet, daß in dem Hohlraum (13) ein Massekörper (14) befestigt ist, wobei vorzugsweise der Schwerpunkt (16) des Mantelkörpers (9) und der Schwerpunkt (15) des Massekörpers (14) nicht zusammenfallen.

8. Meßeinrichtung nach Anspruch 7, dadurch gekennzeichnet, daß der Massekörper als in den Hohlraum (13) eingegossener Zementblock (14) ausgebildet ist.

9. Meßeinrichtung nach einem der vorhergehenden Ansprüche, dadurch gekennzeichnet, daß der Schwimmkörper (2) eine glatte Oberfläche aus einem durch die obere Flüssigkeit schlecht benetzbaren und vorzugsweise gegenüber beiden Flüssigkeiten resistentem Material aufweist.

10. Meßeinrichtung nach einem der vorhergehenden Ansprüche, dadurch gekennzeichnet, daß die äußere Schicht des Schwimmkörpers (2) aus einem durch Öl schlecht benetzbaren Material besteht, vorzugsweise aus ölresistentem Kunststoff, insbesondere aus Polyvinylchlorid (PVC), wobei vorzugsweise der Mantelkörper (9) im wesentlichen aus Polyvinylchlorid (PVC) besteht.

11. Meßeinrichtung nach einem der vorhergehenden Ansprüche, dadurch gekennzeichnet, daß der Schwimmkörper (2) eine im wesentlichen vollständig nach außen abgerundete Form aufweist, wobei vorzugsweise der Schwimmkörper (2) eine nach unten abgerundete Unterseite und vorzugsweise eine nach oben abgerundete, vorzugsweise flach kalottenförmige Oberseite (3) aufweist.

12. Meßeinrichtung nach einem der vorhergehenden Ansprüche 5 bis 11, dadurch gekennzeichnet, daß der Mantelkörper (9) aus einer nach unten geöffneten oberen Schale (10) und einer nach oben geöffneten, vorzugsweise mit der oberen Schale identisch ausgebildeten unteren Schale (11) zusammengesetzt ist, wobei die obere Schale und die untere Schale entlang ihrer aneinanderstoßenden Ränder unter Bildung des Hohlraumes (13) vorzugsweise stoffschlüssig miteinander verbunden, insbesondere miteinander verklebt sind.

13. Meßeinrichtung nach einem der Ansprüche 2 bis 12, dadurch gekennzeichnet, daß die Positionsbestimmungsmittel mindestens ein an dem Schwimmkörper (2) befestigtes, vorzugsweise langgestrecktes Meßelement (4), insbesondere einen Meßstab umfassen, wobei vorzugsweise das Meßelement, insbesondere der Meßstab (4), mindestens eine Markierung aufweist, vorzugsweise mehrere Markierungen in Form einer vertikalen Skala (20).

14. Meßeinrichtung nach einem der Ansprüche 6 bis 13, dadurch gekennzeichnet, daß der Meßstab (4) mit seiner Längsachse parallel zu einer den Masseschwerpunkt und den Auftriebsschwerpunkt verbindenden Geraden ausgerichtet ist.
